# EUROPÄISCHE PATENTSCHRIFT

(11) **EP 3 105 564 B1**
(45) Veröffentlichungstag und Bekanntmachung des Hinweises auf die Patenterteilung: **22.02.2023**
(21) Anmeldenummer: 15701315.2
(22) Anmeldetag: 15.01.2015
(51) Int. Cl.: G01N 1/24, G01N 21/3504, G01N 21/05

(54) **VORRICHTUNG UND VERFAHREN ZUR BESTIMMUNG DER KONZENTRATION ZUMINDEST EINES GASES IN EINEM PROBENGASSTROM MITTELS INFRAROTABSORPTIONSSPEKTROSKOPIE**
DEVICE AND METHOD FOR DETERMINING THE CONCENTRATION OF AT LEAST ONE GAS IN A SAMPLE GAS STREAM BY MEANS OF INFRARED ABSORPTION SPECTROSCOPY
DISPOSITIF ET PROCÉDÉ DE DÉTERMINATION DE LA CONCENTRATION D'AU MOINS UN GAZ DANS UN FLUX DE GAZ ÉCHANTILLON PAR SPECTROSCOPIE D'ABSORPTION INFRAROUGE

(30) Priorität: 14.02.2014 DE 102014101915
(43) Veröffentlichungstag der Anmeldung: 21.12.2016
(73) Patentinhaber: AVL Emission Test Systems GmbH, 41460 Neuss (DE)
(72) Erfinder: FETZNER, Stephan, 76694 Forst (DE)
(74) Vertreter: terpatent Patentanwälte ter Smitten Eberlein-Van Hoof Rütten Daubert
(86) Internationale Anmeldenummer: PCT/EP2015/050640
(87) Internationale Veröffentlichungsnummer: WO 2015/121017

(56) Entgegenhaltungen:
- DE-B3-102006 005 901
- US-A- 3 593 023
- US-A- 4 762 467
- US-A1- 2007 034 792
- US-A1- 2010 284 006
- US-A1- 2013 250 301

## Beschreibung

Die Erfindung betrifft eine Vorrichtung zur Bestimmung der Konzentration zumindest eines Gases in einem Probengasstrom mittels Infrarotabsorptionsspektroskopie mit einer Infrarotstrahlungsquelle, deren Strahlung durch eine Analysezelle führbar ist, einem Probengasstrom, welcher durch eine Förderleitung in die Analysezelle und aus der Analysezelle leitbar ist, einem Detektor, über den ein in der Analysezelle entstehendes Absorptionsspektrum messbar ist, einer Saugstrahlpumpe, die stromabwärts der Analysezelle angeordnet ist und über die Messgas durch die Analysezelle und die Förderleitung förderbar ist sowie ein Verfahren zur Bestimmung der Konzentration zumindest eines Gases in einem Probengasstrom mittels Infrarotabsorptionsspektroskopie mittels einer derartigen Vorrichtung, bei dem eine Strahlung einer Infrarotstrahlungsquelle in eine Analysezelle geleitet wird, die von einem Probengasstrom, der mittels einer Saugstrahlpumpe über eine Förderleitung angesaugt wird, durchströmt wird, woraufhin mittels eines Detektors ein Absorptionsspektrum der aus der Analysezelle austretenden Strahlung ermittelt wird und in einer Recheneinheit aus dem Absorptionsspektrum die Konzentration eines Gases im Probengasstroms berechnet wird.

Die Infrarotspektroskopie ist zur Bestimmung der Konzentration von einzelnen Gaskomponenten bekannt. Die am weitesten verbreiteten Verfahren sind das Fourier Transform Infrarotspektrometer oder das nicht dispersive Infrarotspektrometer. Mit der Entwicklung von kompakten, leistungsstarken Halbleiterlasern etablieren sich zunehmend Gasanalysatoren auf Basis der Laserspektroskopie. Neue Lasertypen wie Quantenkaskadenlaser revolutionieren die Laserspektroskopie im mittleren Infrarotbereich.

Alle diese Analysemethoden beruhen darauf, dass bei Bestrahlung eines Probengases mit Infrarotstrahlen bestimmte Frequenzbereiche absorbiert werden. Die Infrarotstrahlung liegt dabei in dem Bereich des Schwingungsniveaus von Molekülbindungen, die durch die Absorption zum Schwingen angeregt werden. Voraussetzung hierfür ist ein vorhandenes oder im Molekül erzeugbares Dipolmoment. Die verschiedenen Schwingungszustände verursachen Absorptionsverluste der Infrarotstrahlung unterschiedlicher optischer Frequenzen. Das Spektrum in der Transmission enthält somit einzelne für das Gas charakteristische Absorptionslinien, so dass das Probengas auf das Vorhandensein konkreter Moleküle untersucht und deren Konzentration im Probengas bestimmt werden kann..

Mit einem Quantenkaskadenlaser können insbesondere im Abgas von Verbrennungsmotoren vorhandene Schadstoffmoleküle, wie Distickstoffmonoxid, Stickstoffmonoxid, Stickstoffdioxid, Kohlendioxid, Kohlenmonoxid und Ammoniak ermittelt und deren Konzentration bestimmt werden.

Übliche laserspektroskopische Systeme weisen einen Laser als Strahlungsquelle auf, dessen Strahlung über einen optischen Pfad in eine Analysezelle geleitet wird. In dieser Analysezelle wird der Strahl über eine geeignete Spiegelkonfiguration mehrfach reflektiert. Gleichzeitig wird in diese Analysezelle ein Probengasstrom geleitet, durch den die Strahlung des Lasers dringt und dort für eine Anregung der zur optischen Frequenz korrespondierenden Moleküle sorgt. Durch diese Anregung wird Energie der jeweiligen Frequenz absorbiert. Die Intensität des transmittierten Strahls nimmt an dieser Stelle im Spektrum ab. Die Absorption selbst erfolgt nicht exakt scharf, sondern unterliegt einer Verbreiterung aufgrund von Temperatur- und Druckänderungen. Der auf diese Weise in seinem Spektrum veränderte Strahl verlässt die Messzelle und trifft auf einen Detektor, über den das veränderte Frequenzband ausgewertet wird und so auf das Vorhandensein bestimmter Stoffe und deren Konzentrationen geschlossen werden kann. Die Förderung des Probengasstroms erfolgt üblicherweise über eine nachgeschaltete Vakuumpumpe.

Bei der Bestimmung der Konzentration wird die Absorptionscharakteristik im Spektrum ausgewertet bzw. analysiert. Diese Charakteristik wird im Allgemeinen als Linienspektrum der absorbierenden Gase bezeichnet. Es hat sich jedoch gezeigt, dass die Linienform in diesem Spektrum vom Druck und von der Temperatur abhängig ist. Diese Parameter müssen daher für eine Auswertung entweder konstant gehalten oder müssen kontinuierlich messtechnisch erfasst und verrechnet werden. Daher wird zur Erhöhung der Messgenauigkeit das Gas konditioniert sowie Druck und Temperatur möglichst konstant gehalten.

Des Weiteren hat es sich gezeigt, dass insbesondere bei der Messung von heißen und feuchten Gasen, wie beispielsweise von Abgasen von Verbrennungsmotoren, eine Kondensatbildung in der Analysezelle dringend verhindert werden muss, da dies zu einer deutlichen Verfälschung der Messergebnisse führt, weswegen die Messtemperaturen häufig angehoben werden. Des Weiteren hat sich gezeigt, dass Querempfindlichkeiten mit sinkendem Druck vermieden werden können, da das Absorptionsspektrum in Unterdruck sehr schmal und hoch wird, wodurch die Spektren der einzelnen Komponenten keine Überlappung mehr aufweisen. Aus diesem Grund werden die Analysezellen bei Unterdruck betrieben, der beispielsweise ca. 200hPa Absolutdruck beträgt.

Entsprechend ist es bekannt, die Förderung des Messgases mittels Vakuumpumpen durchzuführen. Dies erfolgt bei Analysatoren mit Quantenkaskadenlasern als Strahlungsquelle üblicherweise mittels Membran- oder Drehschieberpumpen.

Nachteilig an diesen Pumpen ist es jedoch, dass sie einen stoßweisen Druck erzeugen, der zu Pulsationen in der Förderleitung führt, was wiederum die Qualität der Messergebnisse negativ beeinflusst, wenn diese Pulsationen nicht durch zusätzliche Bauteile ausgeregelt werden. Hinzu kommt, dass Membranpumpen üblicherweise nur bis etwa 40°C Umgebungstemperatur betrieben werden können und auch bezüglich der Temperatur des Fördergases eingeschränkt sind beziehungsweise hohe Kosten entstehen, wenn eine höhere Temperaturbeständigkeit gefordert wird. Drehschieberpumpen weisen ein relativ hohes Gewicht auf, so dass eine Integration in das Gehäuse des Analysators schwer möglich ist. Beide Pumpenarten benötigen regelmäßige Wartung und unterliegen einem erhöhten Verschleiß.

Aus diesem Grund wird in der DE 10 2006 005 901 ein Analysator vorgeschlagen, bei dem die Förderung des Gases mittels einer Saugstrahlpumpe durchgeführt wird, die weitestgehend wartungsfrei arbeitet, da sie keine beweglichen Teile aufweist. Die Regelung des Förderdrucks erfolgt über in der Förderleitung angeordnete Regelventile.

Des Weiteren ist aus der US 3,593,023 eine Abgasanalyseeinheit mit einem Infrarotmessgerät bekannt, bei dem die Förderung des Analysegases mittels einer Saugstrahlpumpe erfolgt. Zur Druckregelung weist der Pumpenauslass eine Einschnürung auf.

Die US 4,762,467 offenbart eine Destillationsanlage, deren Behälter mit Flüssigkeit gefüllt ist, die aufgeheizt wird und verdampft. Das Gas wird mittels einer Saugstrahlpumpe zunächst in einen Kondensator und von dort aus weiter gefördert. Ein Druck im Behälter darf, um Schäden zu vermeiden, nicht überstiegen werden. Andererseits darf ein Minimaldruck nicht unterschritten werden, um den Siedepunkt im Behälter nicht zu verändern. Hierzu ist in der Treibgasleitung der Saugstrahlpumpe ein Ventil angeordnet, welches in Abhängigkeit des im Behälter und in der Treibgasleitung anliegenden Druckes geregelt wird.

Nachteilig an einer solchen Regelung ist jedoch der erhöhte Treibgasverbrauch, da gegen den Widerstand der Drossel in der Förderleitung gefördert werden muss, so dass immer ein hoher Treibgasdruck anliegen muss.

Daher stellt sich die Aufgabe, eine Vorrichtung und ein Verfahren zur Bestimmung der Konzentration zumindest eines Gases in einem Probengasstrom mittels Infrarotabsorption zu schaffen, mit der die Messergebnisse im Vergleich zu bekannten Ausführungen weiter verbessert werden, indem Druckschwankungen in der Analysezelle minimiert werden. Die Vorrichtung soll möglichst einfach aufgebaut und wartungsarm sein. Gleichzeitig sollen der Verbrauch an benötigtem Treibgas und damit die vorhandenen Betriebskosten möglichst gering gehalten werden.

Diese Aufgabe wird durch eine Vorrichtung zur Bestimmung der Konzentration zumindest eines Gases in einem Probengasstrom mittels Infrarotabsorptionsspektroskopie mit den Merkmalen des Hauptanspruchs 1 sowie durch ein Verfahren mit einer derartigen Vorrichtung gemäß Hauptanspruch 9 gelöst.

Dadurch, dass in einer zu einem Treibgasanschluss der Saugstrahlpumpe führenden Treibgasleitung ein Regelventil angeordnet ist, über das ein Druck in der Treibgasleitung in direkter Abhängigkeit des Förderdrucks in der Förderleitung stromabwärts der Analysezelle oder in der Analysezelle derart einstellbar ist, dass sich ein konstanter Sollwert des Druckes in der Förderleitung stromabwärts der Analysezelle oder in der Analysezelle einstellt, wird der Druck in der Analysezelle durch Änderung des Treibgefälles des Treibgases an der Düse eingestellt. Bezüglich des Verfahrens bedeutet dies, dass der Treibdruck in der Treibgasleitung und der Treibdüse der Saugstrahlpumpe in direkter Abhängigkeit des Förderdrucks in der Analysezelle oder der Förderleitung entsprechend geregelt wird. Daraus folgt, dass das Fördergas nicht gegen einen Widerstand gefördert werden muss, wodurch der Druckluftverbrauch gesenkt wird, da immer nur die Menge an Druckluft entnommen wird, die tatsächlich zur Erzeugung des geforderten Druckgefälles benötigt wird. Das Regelventil ist ein Proportionalventil, welches den Treibdruck in der Treibgasleitung ausschließlich in direkter Abhängigkeit vom Förderdruck in der Förderleitung stromabwärts der Analysezelle oder vom Druck in der Analysezelle regelt. Dies bedeutet, dass mit sich verringerndem Unterdruck in der Förderleitung ein höherer Treibdruck in der Treibgasleitung erzeugt wird. Bei einer derartigen Ausführung sind keine zusätzlichen Bauteile oder Messapparaturen erforderlich. Nach einmaliger Kalibrierung stellt sich bei unveränderten Randbedingungen ein stationärer Zustand ein. Auf zusätzliche Messungen kann verzichtet werden, da durch die proportionale Regelung unmittelbar auf eine Änderung des Drucks in der Förderleitung mit einer entsprechenden Änderung des Drucks in der Treibgasleitung reagiert wird, der zur gewünschten Druckänderung auf den Nenndruck in der Förderleitung führt.

Eine besonders einfache und vorteilhafte Anbindung ergibt sich, wenn das Proportionalventil ein pneumatisches Ventil ist, welches eine Steuerkammer aufweist, die mit der Förderleitung fluidisch verbunden ist. Entsprechend wird der Förderdruck in der Förderleitung in die Steuerkammer des Proportionalventils in der Treibgasleitung geleitet. Durch entsprechende Auslegung des Ventils kann dann beispielsweise eine Erhöhung des absoluten Drucks in der Förderleitung zur Folge haben, dass das Regelventil die Treibgasleitung weiter öffnet, so dass der entstehende Unterdruck an der Saugstrahlpumpe größer wird, wodurch der Absolutdruck in der Förderleitung wieder fällt beziehungsweise der Unterdruck steigt. Zusätzliche Bauteile zur Messung und Regelung sind nicht erforderlich.

Auch wäre es vorteilhaft, stromabwärts der Analysezelle in der Förderleitung oder in der Analysezelle einen Drucksensor anzuordnen. Ein solcher Sensor kann entweder direkt zur Regelung eines anders gearteten Regelventils oder zur Überwachung oder Kalibrierung des Proportionalventils genutzt werden. Eine solche Anordnung erhöht die Sicherheit der Messungen und vermeidet Fehler.

In einer hierzu weiterführenden Ausführungsform ist der Drucksensor mit einer Steuereinheit des Regelventils verbunden, welche eine Stellung des Regelventils in Abhängigkeit der Messwerte des Drucksensors regelt. Somit wird der Förderdruck in der Förderleitung gemessen und die Messwerte werden einer Steuereinheit eines in der Treibgasleitung angeordneten Regelventils zugeführt, wobei das Regelventil in Abhängigkeit dieser Druckwerte angesteuert wird. Bei einer solchen Ausführung kann der Druck in der Förderleitung auf einen beliebigen Sollwert geregelt werden und entsprechend je nach verwendetem Probengas ein optimierter Druck eingestellt werden. Des Weiteren ist eine sehr genaue Regelung möglich, welche vollständig unabhängig von allen Randbedingungen ist.

Vorzugsweise weist die Vorrichtung einen Probengasanschluss und einen Referenz- oder Spülgasanschluss auf, die wahlweise mit der Förderleitung stromaufwärts der Analysezelle verbindbar sind. Durch eine solche Ausführung kann eine einzelne Saugstrahlpumpe sowohl zur Förderung eines Referenzgasstroms als auch zur Förderung des Probengasstromes verwendet werden, so dass Bauteile eingespart werden.

In einer hierzu weiterführenden vorteilhaften Ausgestaltung der Erfindung ist in der Förderleitung eine Verzweigung ausgebildet, in der ein Umschaltventil angeordnet ist, über das die Förderleitung wahlweise mit dem Probengasanschluss oder dem Referenz- oder Spülgasanschluss fluidisch verbindbar ist. So kann über ein einzelnes Ventil zwischen den beiden Anschlüssen umgeschaltet werden, wodurch erneut die Anzahl der Bauteile minimiert wird und so Kosten eingespart werden.

Des Weiteren ist es vorteilhaft, wenn in der Förderleitung stromaufwärts der Analysezelle eine Düse angeordnet ist. Diese dient zur Begrenzung eines maximalen Volumenstroms.

Vorzugsweise ist die Infrarotstrahlungsquelle ein Quantenkaskadenlaser, mit dem besonders genaue Messungen von Stoffen wie Stickoxiden oder Ammoniak möglich.

Es wird somit eine Vorrichtung und ein Verfahren zur Bestimmung der Konzentration eines Gases in einem Probengasstrom mittels Infrarotabsorptionsspektroskopie geschaffen, mit der die Konzentration und Anwesenheit eines Gases mit hoher Genauigkeit und Reproduzierbarkeit festgestellt werden kann, indem Druckschwankungen und Pulsationen zuverlässig vermieden werden. Der Aufbau ist einfach und wartungsarm.

Ein Ausführungsbeispiel einer erfindungsgemäßen Vorrichtung zur Bestimmung der Konzentration zumindest eines Gases in einem Probengasstrom mittels Infrarotabsorptionsspektroskopie ist in den Figuren anhand eines Quantenkaskadenlasers dargestellt und wird nachfolgend in Zusammenhang mit dem erfindungsgemäßen Verfahren beschrieben. Die Betriebskosten sind durch die Reduzierung des Treibgasverbrauchs gering.

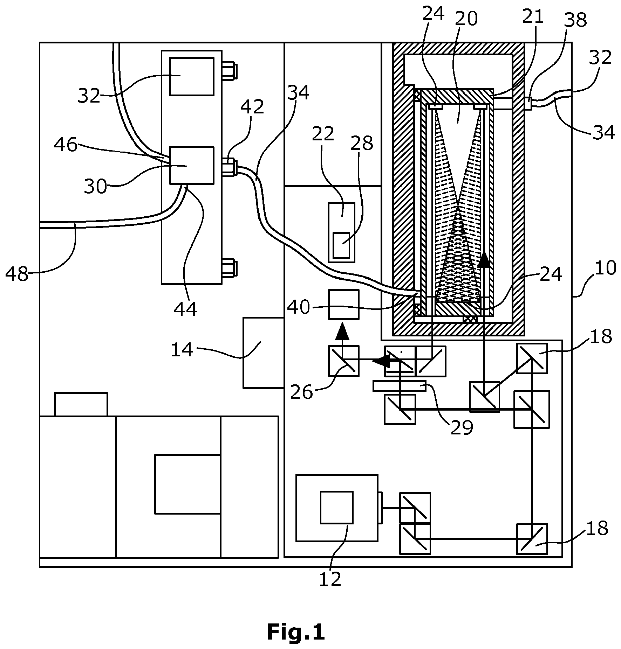

Die Figur 1 zeigt eine schematische Darstellung einer erfindungsgemäßen Vorrichtung zur Bestimmung der Konzentration eines Gases in einem Probengasstrom in Draufsicht.

Die Figur 2 zeigt eine Prinzipdarstellung des Probengasstroms mit einer Saugstrahlpumpe in vergrößerter Darstellung.

Die erfindungsgemäße Vorrichtung zur Bestimmung der Konzentration zumindest eines Gases in einem Probengasstrom mittels Infrarotabsorptionsspektroskopie ist im vorliegenden Ausführungsbeispiel als Quantenkaskadenlaserabsorptionsspektrometer ausgeführt. Dieser besteht aus einem Gehäuse 10, in dem ein aus Halbleiterschichten aufgebauter Quantenkaskadenlaser 12 als Infrarotstrahlungsquelle angeordnet ist, der entweder kontinuierlich oder gepulst betrieben werden kann und insbesondere im mittleren Infrarotbereich Strahlung emittiert. Dieser wird über einen Stromtreiber 14 angesteuert und mittels eines in dieser Ansicht nicht erkennbaren Peltier-Elementes gekühlt.

Der Strahl des Lasers 12 wird über mehrere Spiegel 18 in einen Raum 20 einer Analysezelle 16 oder alternativ über die Spiegel 18 direkt zu einem Detektor 22 geleitet, welcher beispielsweise ein MCT (Quecksilber-Cadmium-Tellurid)-Detektor sein kann, der besonders für die photovoltaische Detektion im mittleren Infrarotbereich geeignet ist und bei dem ein auftreffender Lichtquant direkt in einen messbaren Photostrom umgesetzt wird. Im Raum 20 wird dieser Strahl mehrfach an Objekt- oder Feldspiegeln 24 reflektiert und durchdringt dabei ein in den Raum 20 gefördertes Probengas. Dies führt in bestimmten Frequenzbereichen des gesendeten Lichtbandes zu einer Absorption des Strahls, welche charakteristisch für die Anwesenheit und Konzentration bestimmter Moleküle ist. Nachdem der Strahl mehrfach an den Objekt- oder Feldspiegeln 24 reflektiert wurde, verlässt er die Analysezelle 16 wieder und wird erneut über folgende Spiegel 26 dem Detektor 22 zugeführt.

Das vom Detektor 22 gemessene optische Frequenzband weist durch die absorbierte Strahlung Lücken auf, deren Größe und Tiefe ein Maß für die Konzentration des diesen Frequenzbereich absorbierenden Gases ist. Die entsprechende Umrechnung erfolgt in bekannter Weise in einer Recheneinheit 28 über das Lambert-Beer-Gesetz. Die ausgesendete Wellenlänge des Lasers 12 kann dabei so eingestellt werden, dass selektiv der Absorptionsbereich einer bestimmten Absorptionslinie der Gaskomponente abgefahren werden kann, wodurch Querempfindlichkeiten zu anderen Gaskomponenten vermieden werden. So treten bei der Anwesenheit von Ammoniak beispielsweise Lücken im Wellenlängenbereich von etwa 10 µm auf.

Zu beachten ist jedoch, dass eine zuverlässige Messung nur bei einer korrekten Abstimmung zwischen der Weglänge des Strahls und der zu erwartenden Konzentration des zu messenden Moleküls im Probengasstrom möglich ist, so dass entweder mit einem unverdünnten oder einem verdünnten Probengasstrom gearbeitet werden muss.

Insbesondere ist es erforderlich, die Messbedingungen konstant zu halten. Dabei ist neben einer konstanten Temperatur vor allem darauf zu achten, dass der Druck in der Analysezelle 16 konstant gehalten wird und möglichst während der Messung keine Druckschwankungen auftreten.

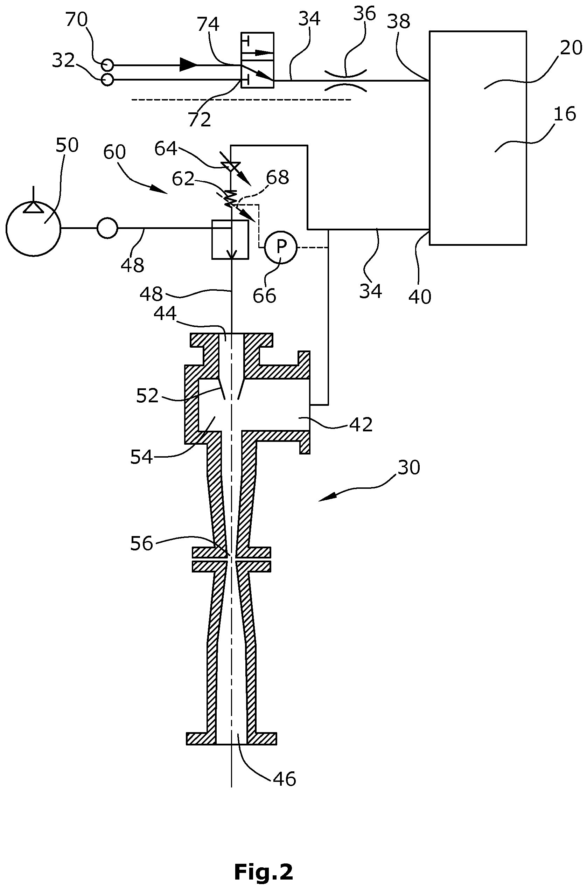

Um dies sicher zu stellen, erfolgt erfindungsgemäß die Probengasförderung mittels einer Saugstrahlpumpe 30, durch die der Probengasstrom in den Raum 20 gesaugt wird. Hierzu weist die Vorrichtung einen Probengasanschluss 32 auf, der beispielsweise mit einer Abgasquelle verbunden wird. Das Abgas gelangt entweder unverdünnt oder in einem festen Verhältnis mit einem bekannten Stoff verdünnt in eine Förderleitung 34. Diese Förderleitung 34 führt über eine Düse 36, mittels derer ein maximal möglicher Volumenstrom von beispielsweise 1l/min festgelegt wird, zu einem Einlass 38 der Analysezelle 16 und so in den Raum 20 der Analysezelle 16. Der Probengasstrom verlässt den Raum 20 wieder über einen Auslass 40, der mit einem zweiten Abschnitt der Förderleitung 34 verbunden ist. Das Ende dieser Förderleitung 34 ist mit einem Sauganschluss 42 der Saugstrahlpumpe 30 verbunden, wie sie in Figur 2 dargestellt ist.

Die Saugstrahlpumpe 30 weist neben dem Sauganschluss 42 einen Treibgasanschluss 44 und einen Auslass 46 auf. Der Treibgasanschluss 44 ist über eine Treibgasleitung 48 mit einer Druckluftanlage 50 verbunden, die Druckluft mit einem Druck von beispielsweise 7 bar zur Verfügung stellt. Alternativ können selbstverständlich auch Druckluftbehälter verwendet werden. Das Treibgas tritt mit entsprechend hoher Geschwindigkeit durch den Treibgasanschluss 44 in die Saugstrahlpumpe 30 und durch eine Treibdüse 52, die zur Maximierung der Geschwindigkeit des Treibgases häufig als Lavaldüse ausgeführt wird, so dass ein hoher dynamischer Druck am Austritt der Treibdüse 52 entsteht. Durch diesen Austritt aus der Treibdüse 52 entsteht in der stromabwärtigen Mischkammer 54, in die auch der Sauganschluss 42 der Förderleitung 34 mündet, in der Grenzschicht zwischen dem schnellen Treibgas und dem Probengas durch Reibung und Turbulenzen eine Impulsübertragung vom Treibgas auf das Probengas, welches entsprechend vom Treibgas mitgerissen wird. In der Mischkammer 54 entspannt sich das Treibgas und mischt sich mit dem Probengasstrom, so dass der Strahl abgebremst wird. Der hohe dynamische Druck wird in statischen Druck umgewandelt. Der Probengasstrom wird durch den Treibgasstrom in der Mischkammer 54 beschleunigt. Es entsteht am Sauganschluss ein Unterdruck, durch den Probengas weiter gefördert wird. Stromabwärts der Mischkammer 54 weist die Saugstrahlpumpe 30 einen Diffusor 56 auf, durch den die Saugwirkung verstärkt wird. Das Gemisch aus Probengasstrom und Treibmittelstrom tritt anschließend über den Auslass 46 der Saugstrahlpumpe 30 aus. Dieses Mischgas wird aus der Vorrichtung abgeführt.

Die Saugwirkung und somit der Sollwert des Unterdrucks am Sauganschluss 42, der im vorliegenden Fall beispielsweise etwa 200hPa betragen soll, wird erfindungsgemäß dadurch geregelt, dass die Geschwindigkeit des Treibgases und somit der auf den Probengasstrom wirkende Treibdruck durch Drosselung der Treibgasleitung 48 eingestellt wird. Dies erfolgt mittels eines in der Treibgasleitung 48 angeordneten Regelventils 60, welches im Ausführungsbeispiel als Proportionalventil ausgeführt ist. Ein Proportionalventil ist ein elektropneumatisches Ventil, dessen Stellung einerseits von der Bestromung einer Spule 62 des Elektromagneten und andererseits von einem in einer Steuerkammer 64 anliegenden Druck abhängt. Die Steuerkammer 64 ist mit der Förderleitung 34 stromabwärts der Analysezelle 16 verbunden, so dass der Druck des Treibgasstroms direkt vom Druck des Probengasstroms in der Förderleitung 34 abhängt. Ist nun ein Solldruckwert von 200hPa in der Förderleitung 34 eingestellt, ist es durch Auslegung des Proportionalventils 60 möglich, dessen Bestromung so zu wählen, dass bei einem geringeren Absolutdruck in der Förderleitung 34 das Proportionalventil 60 den freien Querschnitt weiter schließt, so dass der Treibdruck geringer wird und somit der Druck in der Förderleitung 34 steigt und umgekehrt. Hierzu ist das Regelventil 60 entsprechend zu kalibrieren, so dass sich als stationärer Zustand immer der Zustand des gewünschten Druckes in der Förderleitung 34 einstellt.

In der Figur 2 ist eine alternative Ausführung in gestrichelten Linien dargestellt. In dieser Ausführung ist in der Förderleitung 34 ein Drucksensor 66 angeordnet, der den Druck in der Förderleitung 34 misst und der mit einer Steuereinheit 68 des Regelventils 60, das in diesem Fall beispielsweise als reines Elektromagnetventil ausgebildet ist, elektrisch verbunden ist, so dass die Bestromung entsprechend der Druckwerte des Drucksensors 66 eingestellt wird. So wird beispielsweise bei zu hohem Absolutdruck in der Förderleitung 34 und damit zu geringem Unterdruck die Bestromung zur weiteren Öffnung des Ventilquerschnitts des Regelventils 60 durch entsprechende Signale der Steuereinheit 68 verstärkt, wodurch der Treibgasstrom erhöht wird und damit der Unterdruck in der Förderleitung 34 verstärkt wird.

Bei beiden Ausführungen wird der Druck in der Förderleitung 34 und damit in der Analysezelle 16 durch Änderung des Treibgasdrucks geregelt. Hierdurch wird immer nur die zur gewünschten Fördermenge notwendige Menge an Treibgas benötigt. Entsprechend wird der Treibgasstrom und damit Treibdruck in der Treibgasleitung 48 der Saugstrahlpumpe 30 immer in direkter Abhängigkeit zum Probengasstrom beziehungsweise dem Förderdruck in der Analysezelle 16 beziehungsweise der Förderleitung 34 geregelt.

Neben dieser Förderung eines Probengases über den Probengasanschluss 32 weist die Vorrichtung die Möglichkeit auf, über einen Referenz- oder Spülgasanschluss 70, einen Spülgasstrom oder einen Referenzgasstrom anzusaugen. Hierzu ist in der Förderleitung 34 vor der Analysezelle 16 und vor der Düse 36 eine Verzweigung 72 ausgebildet, in der ein Umschaltventil 74 angeordnet ist, mit welchem der Probengasstrom unterbrochen werden kann und stattdessen eine Verbindung zum Referenz- oder Spülgasanschluss 70 hergestellt werden kann. Über diesen Anschluss kann entweder ein Referenzgas zur Kalibrierung des Detektors 22 in die Analysezelle 16 gesaugt werden oder ein Spülgas zur Entfernung von Verunreinigungen von vorherigen Messungen, so dass nach Durchführung der Spülung das Umschaltventil 74 betätigt wird, um den Spülgasanschluss 70 zu verschließen und im Folgenden die Förderleitung 34 für den Probengasstrom freizugeben. Dieses Spülgas sollte möglichst keine Moleküle enthalten, welche bei den nachfolgenden Messungen im Probengasstrom gemessen werden sollen, so dass eine Verfälschung der Messergebnisse durch Reste des Spülgases in der Analysezelle vermieden wird.

Eine derartige Vorrichtung zur Bestimmung der Konzentration zumindest eines Gases in einem Probengasstrom mittels Infrarotabsorptionsspektroskopie ist kostengünstig herstellbar und weitgehend wartungsfrei zu betreiben. Die erreichbaren Messergebnisse sind sehr exakt und reproduzierbar, insbesondere durch die zuverlässige Vermeidung von Druckstößen. Des Weiteren wird der Verbrauch an Treibgas reduziert, so dass Kosten eingespart werden. Zusätzlich ist die Vorrichtung unempfindlich gegen Kondensatausfall und kann bei hohen Temperaturen von über 50°C Umgebungstemperatur betrieben werden. Das Probengas kann dabei auch Temperaturen von 200°C aufweisen. Zur Spannungsversorgung kann ein Breitbandnetzteil Verwendung finden. Der Stromverbrauch ist gering, da die Vakuumpumpe keine Spannungsversorgung benötigt.

Es sollte deutlich sein, dass die vorliegende Erfindung nicht auf das beschriebene Ausführungsbeispiel beschränkt ist, sondern verschiedene Modifikationen innerhalb des Schutzbereichs des vorliegenden Hauptanspruchs möglich sind.

## Patentansprüche

1. Vorrichtung zur Bestimmung der Konzentration zumindest eines Gases in einem Probengasstrom mittels Infrarotabsorptionsspektroskopie mit einer Analysezelle(16),
einer Infrarotstrahlungsquelle (12), deren Strahlung durch die Analysezelle (16) führbar ist,
einem Probengasstrom, welcher durch eine Förderleitung (34) in die Analysezelle (16) und aus der Analysezelle (16) leitbar ist,
einem Detektor (22), über den ein in der Analysezelle (16) entstehendes Absorptionsspektrum messbar ist,
einer Saugstrahlpumpe (30), die stromabwärts der Analysezelle (16) angeordnet ist und über die Messgas durch die Analysezelle (16) und die Förderleitung (34) förderbar ist,
**dadurch gekennzeichnet, dass**
in einer zu einem Treibgasanschluss (44) der Saugstrahlpumpe (30) führenden Treibgasleitung (48) ein als Proportionalventil ausgeführtes Regelventil (60) angeordnet ist, welches einen Treibdruck in der Treibgasleitung (48) ausschließlich in direkter Abhängigkeit vom Förderdruck in der Förderleitung (34) stromabwärts der Analysezelle (16) oder vom Druck in der Analysezelle (16) derart regelt, dass sich ein konstanter Sollwert des Druckes in der Förderleitung (34) stromabwärts der Analysezelle (16) oder in der Analysezelle (16) einstellt.

2. Vorrichtung zur Bestimmung der Konzentration zumindest eines Gases in einem Probengasstrom mittels Infrarotabsorptionsspektroskopie nach Anspruch 1,
**dadurch gekennzeichnet, dass**
das Proportionalventil (60) ein pneumatisches Ventil ist, welches eine Steuerkammer (64) aufweist, die mit der Förderleitung (34) fluidisch verbunden ist.

3. Vorrichtung zur Bestimmung der Konzentration zumindest eines Gases in einem Probengasstrom mittels Infrarotabsorptionsspektroskopie nach Anspruch 1,
**dadurch gekennzeichnet, dass**
stromabwärts der Analysezelle (16) in der Förderleitung (34) oder in der Analysezelle (16) ein Drucksensor (66) angeordnet ist.

4. Vorrichtung zur Bestimmung der Konzentration zumindest eines Gases in einem Probengasstrom mittels Infrarotabsorptionsspektroskopie nach Anspruch 3,
**dadurch gekennzeichnet, dass**
der Drucksensor (66) mit einer Steuereinheit (68) des Regelventils (60) verbunden ist, welche eine Öffnungsstellung des Regelventils (60) in Abhängigkeit der Messwerte des Drucksensors (66) regelt.

5. Vorrichtung zur Bestimmung der Konzentration zumindest eines Gases in einem Probengasstrom mittels Infrarotabsorptionsspektroskopie nach einem der vorhergehenden Ansprüche,
**dadurch gekennzeichnet, dass**
die Vorrichtung einen Probengasanschluss (32) und einen Referenz- oder Spülgasanschluss (70) aufweist, die wahlweise mit der Förderleitung (34) stromaufwärts der Analysezelle (16) verbindbar sind.

6. Vorrichtung zur Bestimmung der Konzentration zumindest eines Gases in einem Probengasstrom mittels Infrarotabsorptionsspektroskopie nach Anspruch 5,
**dadurch gekennzeichnet, dass**
in der Förderleitung (34) eine Verzweigung (72) ausgebildet ist, in der ein Umschaltventil (74) angeordnet ist, über das die Förderleitung (34) wahlweise mit dem Probengasanschluss (32) oder dem Referenz- oder Spülgasanschluss (70) fluidisch verbindbar ist.

7. Vorrichtung zur Bestimmung der Konzentration zumindest eines Gases in einem Probengasstrom mittels Infrarotabsorptionsspektroskopie nach einem der vorhergehenden Ansprüche,
**dadurch gekennzeichnet, dass**
in der Förderleitung (34) stromaufwärts der Analysezelle (16) eine Düse (36) angeordnet ist.

8. Vorrichtung zur Bestimmung der Konzentration zumindest eines Gases in einem Probengasstrom mittels Infrarotabsorptionsspektroskopie nach einem der vorhergehenden Ansprüche,
**dadurch gekennzeichnet, dass**
die Infrarotstrahlungsquelle (12) ein Quantenkaskadenlaser ist.

9. Verfahren zur Bestimmung der Konzentration zumindest eines Gases in einem Probengasstrom mittels Infrarotabsorptionsspektroskopie mittels einer Vorrichtung gemäß einem der vorhergehenden Ansprüche, bei dem eine Strahlung einer Infrarotstrahlungsquelle (12) in die eine Analysezelle (16) geleitet wird, die von einem Probengasstrom, der mittels einer Saugstrahlpumpe (30) über eine Förderleitung (34) angesaugt wird, durchströmt wird, woraufhin mittels eines Detektors (22) ein Absorptionsspektrum der aus der Analysezelle (16) austretenden Strahlung ermittelt wird und in einer Recheneinheit (28) aus dem Absorptionsspektrum die Konzentration eines Gases im Probengasstroms berechnet wird,
**dadurch gekennzeichnet, dass**
der Treibdruck in der Treibgasleitung (48) und der Treibdüse (52) der Saugstrahlpumpe (30) ausschließlich in direkter Abhängigkeit des Förderdrucks in der Analysezelle (16) oder der Förderleitung (34) derart geregelt wird, dass sich ein konstanter Sollwert des Druckes in der Förderleitung (34) stromabwärts der Analysezelle (16) oder in der Analysezelle (16) einstellt.

10. Verfahren zur Bestimmung der Konzentration zumindest eines Gases in einem Probengasstrom mittels Infrarotabsorptionsspektroskopie nach Anspruch 9,
**dadurch gekennzeichnet, dass**
mit sich verringerndem Unterdruck in der Förderleitung (34) ein höherer Treibdruck in der Treibgasleitung (48) erzeugt wird.

11. Verfahren zur Bestimmung der Konzentration zumindest eines Gases in einem Probengasstrom mittels Infrarotabsorptionsspektroskopie nach einem der Ansprüche 9 oder 10,
**dadurch gekennzeichnet, dass**
der Förderdruck in der Förderleitung (34) in eine Steuerkammer (64) eines Proportionalventils (60) in derTreibgasleitung (48) geleitet wird.

12. Verfahren zur Bestimmung der Konzentration zumindest eines Gases in einem Probengasstrom mittels Infrarotabsorptionsspektroskopie nach einem der Ansprüche 9 bis 10,
**dadurch gekennzeichnet, dass**
der Förderdruck in der Förderleitung (34) gemessen wird und die Messwerte einer Steuereinheit (68) eines in der Treibgasleitung (48) angeordneten Regelventils (60) zugeführt werden, wobei das Regelventil (60) in Abhängigkeit dieser Druckwerte angesteuert wird.

## Claims

1. A device for determining the concentration of at least one gas in a sample gas flow by means of infrared absorption spectroscopy, comprising
an analysis cell (16)
an infrared radiation source (12) the radiation of which is adapted to be guided through an analysis cell (16),
a sample gas flow which is adapted to be conducted into said analysis cell (16) and out of said analysis cell (16) via a delivery line (34),
a detector (22) via which an absorption spectrum arising in said analysis cell (16) is adapted to be measured,
a suction jet pump (30) which is arranged downstream of said analysis cell (16) and via which a sample gas is adapted to be fed through said analysis cell (16) and said delivery line (34),
**characterized in that**
a regulating valve (60) designed as a proportional valve is arranged in a propellant gas line (48) leading to a propellant gas connection (44) of the suction jet pump (30), which regulating valve (60) regulates a propellant pressure in the propellant gas line (48) exclusively as a direct function of the pressure in the delivery line (34) downstream of the analysis cell (16) or of the pressure in the analysis cell (16) in such a way that a constant setpoint value of the pressure in the delivery line (34) downstream of the analysis cell (16) or in the analysis cell (16) is established.

2. The device for determining the concentration of at least one gas in a sample gas flow by means of infrared absorption spectroscopy according to claim 1,
**characterized in that**
the proportional valve (60) is a pneumatic valve which comprises a control chamber (64) that is fluidically connected with the delivery line (34).

3. The device for determining the concentration of at least one gas in a sample gas flow by means of infrared absorption spectroscopy according to claim 1,
**characterized in that**
a pressure sensor (66) is arranged downstream of the analysis cell (16) in the delivery line (34) or in said analysis cell (16).

4. The device for determining the concentration of at least one gas in a sample gas flow by means of infrared absorption spectroscopy according to claim 3,
**characterized in that**
the pressure sensor (66) is connected with a control unit (68) of the regulating valve (60), which regulates an opening position of said regulating valve (60) as a function of the measured values of said pressure sensor (66).

5. The device for determining the concentration of at least one gas in a sample gas flow by means of infrared absorption spectroscopy according to any one of the preceding claims,
**characterized in that**
the device comprises a sample gas connection (32) and a reference or purging gas connection (70) which are selectively connectable with the delivery line (34) upstream of the analysis cell (16).

6. The device for determining the concentration of at least one gas in a sample gas flow by means of infrared absorption spectroscopy according to claim 5,
**characterized in that**
in the delivery line (34) a branch (72) is provided in which a switch valve (74) is arranged via which said delivery line (34) is selectively fluidically connectable with the sample gas connection (32) or the reference or purging gas connection (70).

7. The device for determining the concentration of at least one gas in a sample gas flow by means of infrared absorption spectroscopy according to any one of the preceding claims,
**characterized in that**
a nozzle (36) is arranged in the delivery line (34) upstream of the analysis cell (16).

8. The device for determining the concentration of at least one gas in a sample gas flow by means of infrared absorption spectroscopy according to any one of the preceding claims,
**characterized in that**
the infrared radiation source (12) is a quantum cascade laser.

9. A method for determining the concentration of at least one gas in a sample gas flow by means of infrared absorption spectroscopy by means of a device according to any one of the preceding claims, wherein a radiation of an infrared radiation source (12) is conducted into an analysis cell (16) through which a sample gas flow flows which is sucked in by means of a suction jet pump (30) via a delivery line (34), whereupon an absorption spectrum of the radiation exiting said analysis cell (16) is determined by means of a detector (22) and in a computing unit (28) the concentration of a gas in the sample gas flow is computed on the basis of the absorption spectrum,
**characterized in that**
the propellant pressure in a propellant gas line (48) and a propelling nozzle (52) of said suction jet pump (30) is regulated exclusively as a direct function of the delivery pressure in said analysis cell (16) or said delivery line (34) in such a way that a constant setpoint value of the pressure in the delivery line (34) downstream of the analysis cell (16) or in the analysis cell (16) is established.

10. The method for determining the concentration of at least one gas in a sample gas flow by means of infrared absorption spectroscopy according to claim 9,
**characterized in that**
with a reducing negative pressure in the delivery line (34) a higher propellant pressure is generated in the propellant gas line (48).

11. The method for determining the concentration of at least one gas in a sample gas flow by means of infrared absorption spectroscopy according to any one of claim 9 or 10,
**characterized in that**
the feed pressure in the delivery line (34) is directed into a control chamber (64) of a proportional valve (60) in the propellant gas line (48).

12. The method for determining the concentration of at least one gas in a sample gas flow by means of infrared absorption spectroscopy according to any one of claim 9 to 10,
**characterized in that**
the feed pressure is measured in the delivery line (34) and the measured values are provided to a control unit (68) of a regulating valve (60) arranged in the propellant gas line (48), wherein said regulating valve (60) is controlled as a function of these pressure values.

## Revendications

1. Appareil pour déterminer la concentration d'au moins un gaz dans un flux de gaz échantillon par spectroscopie d'absorption infrarouge, qui comprend une cellule d'analyse (16),
une source de rayons infrarouges (12), dont les rayons peuvent être guidés à travers la cellule d'analyse (16),
un flux de gaz échantillon, qui peut être conduit dans la cellule d'analyse (16) et à partir de la cellule d'analyse (16) par une conduite de transport (34),
un détecteur (22) qui permet de déterminer un spectre d'absorption dans la cellule d'analyse (16),
une pompe à jet aspirant (30) qui est disposée en aval de la cellule d'analyse (16) et par laquelle du gaz de mesure peut être transporté à travers la cellule d'analyse (16) et la conduite de transport (34),
**caractérisé en ce que**
dans une conduite de gaz propulseur (48) menant à un raccord de gaz propulseur (44) de la pompe à jet aspirant (30) est disposée une valve de réglage (60) constituée par une valve proportionnelle, qui règle une pression de propulsion dans la conduite de gaz propulseur (48) exclusivement en fonction directe de la pression de transport dans la conduite de transport (34) en aval de la cellule d'analyse (16) ou de la pression dans la cellule d'analyse (16), de telle sorte qu'une valeur prescrite constante de la pression dans la conduite de transport (34) en aval de la cellule d'analyse (16) ou dans la cellule d'analyse (16) s'établit.

2. Appareil pour déterminer la concentration d'au moins un gaz dans un flux de gaz échantillon par spectroscopie d'absorption infrarouge selon la revendication 1,
**caractérisé en ce que**
la valve proportionnelle (60) est une valve pneumatique qui comprend une chambre de commande (64) qui est en connexion fluidique avec la conduite de transport (34).

3. Appareil pour déterminer la concentration d'au moins un gaz dans un flux de gaz échantillon par spectroscopie d'absorption infrarouge selon la revendication 1,
**caractérisé en ce que**
un capteur de pression (66) est disposé en aval de la cellule d'analyse (16) dans la conduite de transport (34) ou dans la cellule d'analyse (16).

4. Appareil pour déterminer la concentration d'au moins un gaz dans un flux de gaz échantillon par spectroscopie d'absorption infrarouge selon la revendication 3,
**caractérisé en ce que**
le capteur de pression (66) est relié à une unité de commande (68) de la valve de réglage (60) qui régule une position d'ouverture de la valve de réglage (60) en fonction des valeurs mesurées par le capteur de pression (66).

5. Appareil pour déterminer la concentration d'au moins un gaz dans un flux de gaz échantillon par spectroscopie d'absorption infrarouge selon l'une quelconque des revendications précédentes,
**caractérisé en ce que**
l'appareil comprend un port de gaz échantillon (32) et un port de gaz de référence ou de purge (70) qui peuvent être connectés sélectivement à la conduite de transport (34) en amont de la cellule d'analyse (16).

6. Appareil pour déterminer la concentration d'au moins un gaz dans un flux de gaz échantillon par spectroscopie d'absorption infrarouge selon la revendication 5,
**caractérisé en ce que**
dans la conduite de transport (34) est formée une ramification (72) dans laquelle est disposée une vanne de commutation (74) par laquelle la conduite de transport (34) peut être connectée fluidiquement, au choix, au port de gaz échantillon (32) ou au port de gaz de purge ou de référence (70).

7. Appareil pour déterminer la concentration d'au moins un gaz dans un flux de gaz échantillon par spectroscopie d'absorption infrarouge selon l'une des revendications précédentes,
**caractérisé en ce que**
une buse (36) est disposée dans la conduite de transport (34) en amont de la cellule d'analyse (16).

8. Appareil pour déterminer la concentration d'au moins un gaz dans un flux de gaz échantillon par spectroscopie d'absorption infrarouge selon l'une quelconque des revendications précédentes,
**caractérisé en ce que**
la source de rayons infrarouges (12) est un laser à cascade quantique.

9. Méthode pour déterminer la concentration d'au moins un gaz dans un flux de gaz échantillon par spectroscopie d'absorption infrarouge au moyen d'un appareil selon l'une quelconque des revendications précédentes, dans laquelle un rayonnement d'une source de rayons infrarouges (12) est dirigé dans la cellule d'analyse (16) qui est alimentée par un flux de gaz échantillon, qui est aspiré au moyen d'une pompe à jet aspirant (30) via une conduite de transport (34), après quoi un spectre d'absorption du rayonnement sortant de la cellule d'analyse (16) est déterminé au moyen d'un détecteur (22) et la concentration d'un gaz dans le flux de gaz échantillon est calculée dans une unité de computation (28) à partir du spectre d'absorption,
**caractérisé en ce que**
la pression de propulsion dans la conduite de gaz propulseur (48) et la buse de propulsion (52) de la pompe à jet aspirant (30) est contrôlée exclusivement en fonction directe de la pression de transport dans la cellule d'analyse (16) ou la conduite de transport (34) de telle sorte qu'une valeur prescrite constante de la pression dans la conduite de transport (34) s'établisse en aval de la cellule d'analyse (16) ou dans la cellule d'analyse (16).

10. Méthode pour déterminer la concentration d'au moins un gaz dans un flux de gaz échantillon par spectroscopie d'absorption infrarouge selon la revendication 9,
**caractérisé en ce que**
lorsque la dépression dans la conduite de transport (34) diminue, une pression de propulsion plus élevée est générée dans la conduite de gaz propulseur (48).

11. Méthode pour déterminer la concentration d'au moins un gaz dans un flux de gaz échantillon par spectroscopie d'absorption infrarouge selon l'une des revendications 9 ou 10,
**caractérisé en ce que**
la pression de transport dans la conduite de transport (34) est dirigée vers une chambre de commande (64) d'une vanne proportionnelle (60) dans la conduite de gaz propulseur (48).

12. Méthode pour déterminer la concentration d'au moins un gaz dans un flux de gaz échantillon par spectroscopie d'absorption infrarouge selon l'une des revendications 9 à 10,
**caractérisé en ce que**
la pression de transport dans la conduite de transport (34) est mesurée et les valeurs mesurées sont envoyées à une unité de commande (68) d'une vanne de réglage (60) disposée dans la conduite de gaz propulseur (48), la vanne de réglage (60) est pilotée en fonction de ces valeurs de pression.
